# EUROPEAN PATENT SPECIFICATION

(11) **EP 0 999 302 B1**
(45) Date of publication and mention of the grant of the patent: **20.08.2003**
(21) Application number: 99120523.8
(22) Date of filing: 15.10.1999
(51) Int. Cl.: D06F 58/20

(54) **Tumble dryer with a heat pump**
Trommeltrockner mit einer Wärmepumpe
Sèche-linge à tambour avec pompe à chaleur

(30) Priority: 21.10.1998 DE 19848393; 18.11.1998 DE 19853234
(43) Date of publication of application: 10.05.2000
(73) Proprietor: WHIRLPOOL CORPORATION, Benton Harbor Michigan 49022 (US); LARE GmbH, 45894 Gelsenkirchen (DE)
(72) Inventor: Sdrojewski, Rolf c/o Whirlpool Europe s.r.l., 21025 Comerio (IT); Haselmeier, Ralf c/o Whirlpool Europe s.r.l., 21025 Comerio (IT); Berner, Dietrich c/o Whirlpool Europe s.r.l., 21025 Comerio (IT)
(74) Representative: Guerci, Alessandro

(56) References cited:
- DE-A- 4 304 226
- DE-A- 4 434 205
- DE-A- 19 638 865

## Description

The invention relates to a tumble dryer with a closed process air circuit comprising laundry drum, circulating fan, refrigerant evaporator and refrigerant condenser of a heat pump, in which the process air delivered from the laundry drum is led by way of the refrigerant evaporator and the refrigerant condenser and returned to the laundry drum.

A tumble drier of this type is known from DE 43 04 426 A1, DE 44 34 205 A1 and DE 196 38 865.

Tumble dryers with heat pump can function satisfactorily in a closed process air cycle only if the excess heat generated during the drying process can be emitted into the surroundings. There are various possible ways of doing this. The heat emission can be dissipated to housing and air ducting parts of the tumble drier such as, for example, to a large front door, to the rear wall or to a side wall.

A heat exchange via the ambient air intake is also known, but this is always associated with the emission of moist air into the area of installation. This leads, moreover, to a low water condensation rate in the heat pump. For this reason auxiliary heating has also in the past been provided, which is primarily used to reduce the start-up time and hence the length of the drying process. Operation with auxiliary heating has the disadvantage, however, that trouble-free operation is not possible without external heat emission.

As DE 44 34 205 A1 in particular shows, dissipation of the excess heat by means of an additional cooling stage, which is incorporated into the refrigerant circuit between the refrigerant outlet of the refrigerant condenser and the refrigerant inlet of the refrigerant evaporator of the heat pump, is also already known. It has emerged, however, that this tumble dryer functions reliably and efficiently only if the cooling capacity of the cooling stage is controllable or adjustable. This, however, entails an additional cost for the cooling stage.

In DE 1 96 38865 a tumble dryer is disclosed, where the cooling medium Supply is controlled via a throttle component in accordance with the temperature registered by a measuring device.

The object of the invention in a tumble dryer of the said type is to emit by simple means the excess heat occurring during the drying process, whilst retaining the advantageous closed process air circuit, and in addition to shorten the start-up time taken to reach the working temperature.

This object is achieved according to the invention in that a heat flow correction element is incorporated into the refrigerant circuit between the refrigerant outlet of the refrigerant evaporator and the refrigerant inlet of the compressor.

In the said refrigerant circuit the compressor compresses refrigerant in vapour form and forces it into the refrigerant condenser. Under high pressure, the refrigerant is hot and heats the surface of the refrigerant condenser. The surface of the refrigerant condenser emits heat, so that the refrigerant is liquefied and thus passes by way of the expansion element into the refrigerant evaporator. Owing to the low pressure prevailing after expansion, both the refrigerant and the surface of the refrigerant evaporator are relatively cold, so that both the refrigerant evaporator and the downstream re-evaporator are at approximately the same temperature.

The warm, moist air from the laundry drum first passes to the relatively cold refrigerant evaporator, so that the moisture condenses out of the air, thereby ensuring dehumidification of the process air. At the downstream refrigerant condenser the process air is heated up and returned to the laundry drum by way of the circulating fan. At the beginning of the drying process the damp laundry has a temperature, for example, of 15°C. The surface of the refrigerant evaporator has a temperature of approximately 10°C and the surface of the refrigerant condenser a temperature of approximately 30°C.

Where, according to a further embodiment, it is proposed that an auxiliary fan be assigned to the heat flow correction element, the fan drawing in air from the confines of the appliance, from the area of installation or outside air, ducting it via the heat flow correction element and feeding it into the confines of the appliance, the area of installation or the outside air, the heat flow correction element, which at this point has approximately the same surface temperature of 10° as the refrigerant evaporator, is subjected to an air flow of approximately 20°C. The energy fed to the system in this way enables the condensation temperature to rise faster, thereby speeding up the evaporation of water from the damp laundry. The tumble dryer therefore attains its ideal working point very quickly. After attaining the ideal working point, the refrigerant at the outlet of the refrigerant evaporator begins to overheat more and more. The air fed in by the auxiliary fan flows over the surface of the heat flow correction element and cools the refrigerant down again to a temperature closer to the actual evaporation temperature of the refrigerant. After the cooling in the heat flow correction element the compressor draws in the now only slightly overheated refrigerant. The excess heat is thereby removed from the heat pump process at an ideal point. The cooling air acting on the heat flow correction element is dry and can furthermore be used for ventilating the tumble dryer housing.

By means of the heat flow correction element, therefore, excess heat is extracted by simple means without having to open the closed process air circuit or the necessity for additional control or adjustment of the heat flow correction element. In addition, in the heating phase the operating condition is attained more rapidly due to the heat from the ambient air fed in via the heat flow correction element, thereby shortening the drying process and reducing the energy consumption. With the heat flow correction element a type of self-regulating process is achieved, since at a refrigerant temperature in the refrigerant evaporator of less than 35°C, for example, energy is fed to the system, and at a refrigerant temperature greater than 40°C, energy is withdrawn.

To speed up the heating phase, provision can be made, according to a further embodiment, for the incorporation into the process air circuit of a heating element, which is preferably arranged downstream of the refrigerant condenser in the direction of flow of the process air or which can be switched on and off in connection with the auxiliary fan of the heat flow correction element. The heating element is preferably electrically operated.

If, according to one embodiment, provision is made for the refrigerant outlet of the refrigerant condenser to be connected to the refrigerant inlet of the refrigerant evaporator by way of an expansion device, the said expansion device acts as separating element between the high pressure in the refrigerant condenser and the low pressure in the refrigerant evaporator.

The heat flow correction element is preferably acted upon by ambient air throughout the entire drying process.

The refrigerant cycle of the heat pump may furthermore contain a refrigerant evaporator.

The invention will be explained in more detail with reference to an embodiment shown in the drawing in which:
- Figure 1: shows a diagram of the closed process air cycle of a tumble dryer with heat pump and additional heat flow correction element and
- Figure 2: shows the refrigerant cycle of the heat pump with the heat flow correction element incorporated.

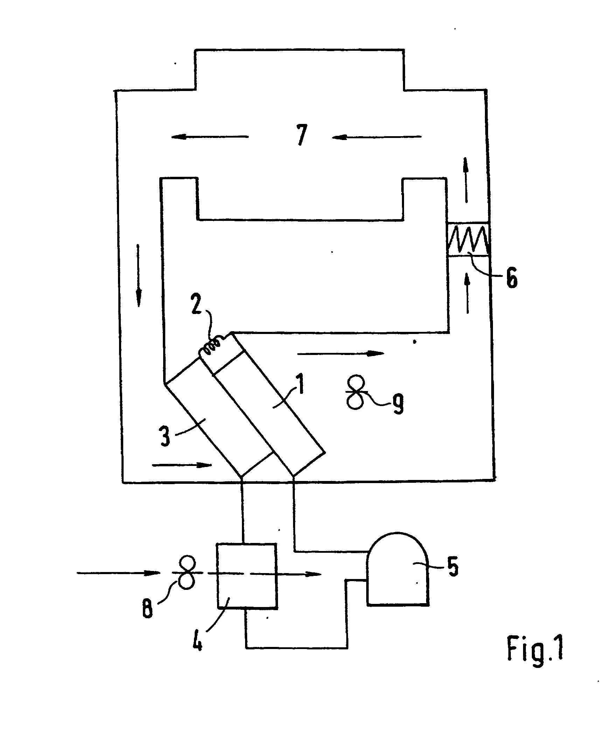

As figure 1 shows, the laundry drum 7 with the refrigerant evaporator 3 and the refrigerant condenser 1 of the heat pump form a closed process air circuit. In this, the process air delivered from the laundry drum 7 passes by way of the refrigerant evaporator 3 and the refrigerant condenser 1 and a heating element 6 back to the laundry drum 7. The circulating fan 9 is preferably incorporated downstream of the refrigerant condenser 1 in the direction of flow of the process air. The refrigerant circuit contains a compressor 5 and a heat flow correction element 4, to which an auxiliary fan 8 is assigned. The auxiliary fan 8 acts on the heat flow correction element 4 with air from the installation area or with outside air and cools its surface down or heats it up in the heating phase. After passing the heat flow correction element 4 this air is fed to the dryer housing for ventilation or returned to the installation area or the outside air.

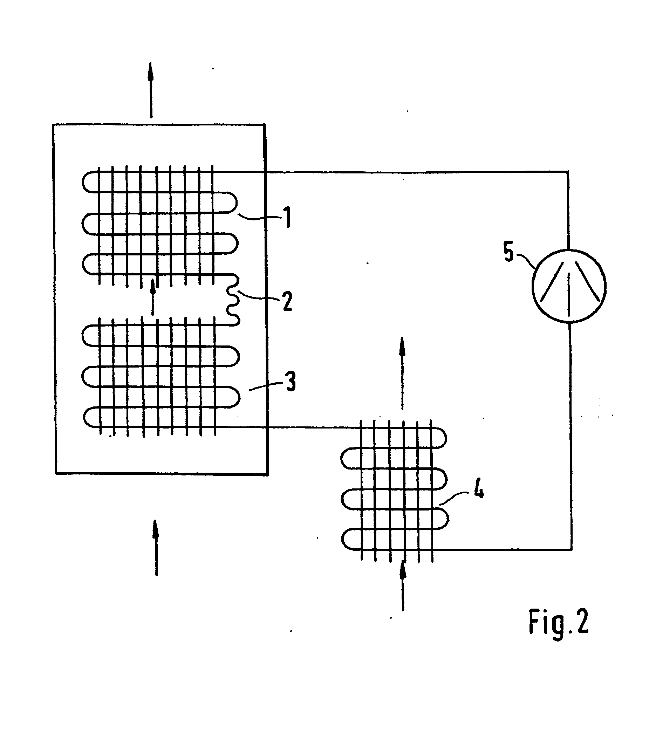

As figure 2 shows, the refrigerant passes from the pressure outlet of the compressor 5 to the refrigerant inlet of the refrigerant condenser 1. The refrigerant outlet of the refrigerant condenser 1 is connected to the refrigerant inlet of the refrigerant evaporator 3 by way of an expansion device 2 and acts as separating element between the pressure levels of these two parts of the refrigerant circuit. The refrigerant outlet of the refrigerant evaporator 3 leads to the heat flow correction element 4, that is to the connection which in the cooling air flow path forms the outlet for the heat flow correction element 4. The connection of the heat flow correction element 4, which in the cooling air flow path forms the inlet for the heat flow correction element 4, is connected to the intake inlet of the compressor 5.

The expansion device 2 may be designed as expansion valve or expansion capillary.

Should a cooling phase be provided in order to prevent creasing of the laundry after the drying process, the laundry drum 7 is operated in this phase and the circulating fan 9 and the auxiliary fan 8 of the heat flow correction element 4 are switched on. During this cooling phase the user may open the door at any time and take the laundry out of the laundry drum. The cooling phase may be made dependent upon the end of the drying process and the action of removing the laundry. The length of the cooling phase is predetermined by the program, but it can also be controlled and extended as a function of the time and temperature.

## Claims

1. Tumble dryer with a closed process air cycle comprising laundry drum (7),
circulating fan (9), refrigerant evaporator (3) and refrigerant condenser (1) of a heat pump, in which the process air delivered from the laundry drum (7) is led by way of the refrigerant evaporator (3) and the refrigerant condenser (1) and returned to the laundry drum,
**characterised in that**
a heat flow correction element (4) is incorporated into the refrigerant circuit between the refrigerant outlet of the refrigerant evaporator (3) and the refrigerant inlet of the compressor (5), such heat flow correction element (4) having an auxiliary fan (8) for drawing air from the confines of the appliance or from the area of installation or outside air, for leading the drawn air via the heat flow correction element (4) and for feeding again the air to the confines of the appliance, the area of installation or the outside air, with the heat flow correction element (4) a self-regulating process is achieved which either feeds energy to the system or extracts excess heat depending on the heat from the ambient air fed in via the heat flow correction element (4).

2. Tumble dryer according to one of claim 1,
**characterised in that**
a heating element (6), which is preferably arranged downstream of the refrigerant condenser (1) in the direction of flow of the process air or can be switched on and off in connection with the auxiliary fan (8) of the heat flow correction element (4), is incorporated into the process air circuit:

3. Tumble dryer according to one of claim 1 or 2,
**characterised in that**
the circulating fan (9) is arranged downstream of the refrigerant condenser (1) in the direction of flow of the process air.

4. Tumble dryer according to one of claims 1 to 3,
**characterised in that** the refrigerant outlet of the refrigerant condenser (1) is connected by way of an expansion device (2) to the refrigerant inlet of the refrigerant evaporator (3).

5. Tumble dryer according to one of claims 1 to 4,
**characterised in that**
a refrigerant filter dryer is incorporated into the refrigerant circuit.

6. Tumble dryer according to claim 1,
**characterised in that**
the heat flow correction element (4) is preferably acted upon by ambient air throughout the entire drying process.

7. Tumble dryer according to claim 2,
**characterised in that**
the heating element (4) is electrically operated.

8. Tumble dryer according to one of claims 1 to 7,
**characterised in that**
the cooling air flow for the heat flow correction element (4) is led from the outlet that is connected to the compressor (5) to the inlet that is connected to the outlet of the refrigerant evaporator (3).

9. Tumble dryer according to one of claims 1 to 19,
**characterised in that**
a cooling phase, in which the laundry drum (7) can be driven, and the circulating fan (9) and the auxiliary fan (8) of the heat flow correction element (4) are switched on, can be performed after the drying process.

## Patentansprüche

1. Trommeltrockner mit einer geschlossenen Prozessluftkreislaufvorrichtung, die eine Wäschetrommel (7), einen Kreislaufventilator (9), einen Kühlmittelverdampfer (3) und einen Kühlmittelkondensator (1) einer Wärmepumpe aufweist und in der die von der Wäschetrommel (7) abgegebene Prozessluft über den Kühlmittelverdampfer (3) und den Kühlmittelkondensator (1) zurück zur Wäschetrommel (7) strömt,
**dadurch gekennzeichnet,**
**dass** ein Wärmestromkorrekturelement (4) in die Kühlmittelkreislaufvorrichtung zwischen dem Kühlmittelausgang des Kühlmittelverdampfers (3) und dem Kühlmitteleingang des Kompressors (5) eingefügt ist, dass das Wärmestromkorrekturelement (4) einen Zusatzventilator (8) zum Abziehen von Luft aus dem Grenzbereich des Trommeltrockners, dem Installationsbereich oder dem Außenluftbereich, zum Führen der abgezogenen Luft über das Wärmestromkorrekturelement (4) und zum Zurückführen der Luft in den Grenzbereich des Trommeltrockners, dem Installationsbereich oder dem Außenluftbereich aufweist und dass mit dem Wärmestromkorrekturelement (4) ein Selbstregulierungsprozess erreicht wird, bei dem abhängig von der Wärme der über das Wärmestromkorrekturelement (4) geführten Umgebungsluft entweder Energie dem System zugeführt oder die Überschusswärme abgeführt wird.

2. Trommeltrockner nach Anspruch 1,
**dadurch gekennzeichnet,**
**dass** ein Heizelement (6) vorzugsweise stromabwärts vom Kühlmittelkondensator (1) in Strömungsrichtung der Prozessluft angeordnet ist oder in Verbindung mit dem Zusatzventilator (8) des Wärmestromkorrekturelements (4) einund ausgeschaltet werden kann und in die Prozessluftkreislaufvorrichtung eingefügt ist.

3. Trommeltrockner nach Anspruch 1 oder 2,
**dadurch gekennzeichnet,**
**dass** der Kreislaufventilator (9) stromabwärts vom Kühlmittelkondensator in Strömungsrichtung der Prozessluft angeordnet ist.

4. Trommeltrockner nach einem der Ansprüche 1 bis 3,
**dadurch gekennzeichnet,**
**dass** der Kühlmittelausgang des Kühlmittelkondensators (1) über eine Ausdehnungsvorrichtung (2) mit dem Kühlmitteleingang des Kühlmittelverdampfers (3) verbunden ist.

5. Trommeltrockner nach einem der Ansprüche 1 bis 4,
**dadurch gekennzeichnet,**
**dass** ein Kühlmittelfiltertrockner in die Kühlmittelkreislaufvorrichtung eingefügt ist.

6. Trommeltrockner nach Anspruch 1,
**dadurch gekennzeichnet,**
**dass** das Wärmestromkorrekturelement (4) vorzugsweise während des ganzen Trocknungsvorgangs von der Umgebungsluft umströmt wird.

7. Trommeltrockner nach Anspruch 2,
**dadurch gekennzeichnet,**
**dass** das Heizelement (6) elektrisch betrieben wird.

8. Trommeltrockner nach einem der Ansprüche 1 bis 7,
**dadurch gekennzeichnet,**
**dass** der Kühlluftstrom für das Wärmestromkorrekturelement (4) von dem mit dem Kompressor (5) verbundenen Ausgang zu dem mit dem Ausgang des Kühlmittelverdampfers (3) verbundenen Eingang geführt ist.

9. Trommeltrockner nach einem der Ansprüche 1 bis 8,
**dadurch gekennzeichnet,**
**dass** nach dem Trocknungsvorgang eine Kühlphase vorgesehen werden kann, in der die Wäschetrommel (7) betrieben werden kann und der Kreislaufventilator (9) und der Zusatzventilator (8) des Wärmestromkorrekturelements (4) eingeschaltet werden.

## Revendications

1. Séchoir à tambour avec cycle fermé de l'air de traitement, comprenant un tambour (7) pour le linge, un ventilateur de circulation (9), un évaporateur (3) du réfrigérant et un condenseur (1) du réfrigérant d'une pompe à chaleur, dans lequel l'air de traitement délivré par le tambour (7) pour le linge est amené par l'intermédiaire de l'évaporateur (3) du réfrigérant et du condenseur (1) du réfrigérant et est renvoyé au tambour pour le linge, **caractérisé en ce que**
un élément (4) de correction du flux de chaleur est incorporé dans le circuit du réfrigérant entre la sortie du réfrigérant de l'évaporateur (3) du réfrigérant et l'entrée du réfrigérant du compresseur (5), un tel élément (4) de correction du flux de chaleur possédant un ventilateur auxiliaire (8) pour entraîner de l'air à partir des limites de l'appareil ou à partir de la zone d'installation ou à partir de l'air extérieur, pour diriger l'air entraîné dans l'élément (4) de correction du flux de chaleur et pour envoyer à nouveau l'air aux limites de l'appareil, à la zone d'installation ou à l'air extérieur et un processus d'autorégulation est réalisé avec l'élément (4) de correction du flux de chaleur, processus qui soit envoie de l'énergie au système, soit extrait de la chaleur en excès en fonction de la chaleur à partir de l'air ambiant introduit par l'intermédiaire de l'élément (4) de correction du flux de chaleur.

2. Séchoir à tambour selon la revendication 1, **caractérisé en ce que**
un élément chauffant (6), qui est disposé de préférence en aval du condenseur (1) du réfrigérant dans la direction de circulation de l'air de traitement ou peut être branché ou débranché en liaison avec le ventilateur auxiliaire (8) de l'élément (14) de correction du flux de chaleur, est incorporé dans le circuit de l'air de traitement.

3. Séchoir à tambour selon l'une des revendications 1 ou 2, **caractérisé en ce que**
le ventilateur de circulation (9) est disposé en aval du condenseur (1) du réfrigérant dans la direction de circulation de l'air de traitement.

4. Séchoir à tambour selon l'une des revendications 1 à 3, **caractérisé en ce que**
la sortie du réfrigérant du condenseur (1) du réfrigérant est raccordée au moyen d'un dispositif d'expansion (2) à l'entrée du réfrigérant de l'évaporateur (3) du réfrigérant.

5. Séchoir à tambour selon l'une des revendications 1 à 4, **caractérisé en ce que**
un séchoir à filtre pour le réfrigérant est incorporé dans le circuit du réfrigérant.

6. Séchoir à tambour selon la revendication 1, **caractérisé en ce que**
de préférence l'air ambiant agit sur l'élément (4) de correction du flux de chaleur sur l'ensemble du processus de séchage.

7. Séchoir à tambour selon la revendication 2, **caractérisé en ce que**
l'élément chauffant (4) est actionné électriquement.

8. Séchoir à tambour selon l'une des revendications 1 à 7, **caractérisé en ce que**
l'écoulement d'air de refroidissement pour l'élément (4) de correction du flux de chaleur est délivré par la sortie qui est raccordée au compresseur (5), à l'entrée qui est raccordée à la sortie de l'évaporateur (3) du réfrigérant.

9. Séchoir à tambour selon l'une des revendications 1 à 9, **caractérisé en ce que**
une phase de refroidissement, lors de laquelle le tambour (7) pour le linge peut être entraîné et le ventilateur de circulation (9) et le ventilateur auxiliaire (8) de l'élément (4) de correction du flux de chaleur, sont branchés, peut être mise en oeuvre après le processus de séchage.
